(19) Europäisches Patentamt
European Patent Office
Office européen des brevets

(11) **EP 2 508 109 B1**

(12) **EUROPÄISCHE PATENTSCHRIFT**

(45) Veröffentlichungstag und Bekanntmachung des Hinweises auf die Patenterteilung:
**18.06.2014   Patentblatt 2014/25**

(51) Int Cl.:
*A47J 27/00* *(2006.01)*      *A47J 27/08* *(2006.01)*
*A47J 27/62* *(2006.01)*      *A47J 36/10* *(2006.01)*
*H05B 1/02* *(2006.01)*

(21) Anmeldenummer: **12163160.0**

(22) Anmeldetag: **04.04.2012**

(54) **Gargerät mit einem Tiegel, einem Deckel und einer Gerätesteuerung und Verfahren zur Steuerung eines Garvorganges**

Cooking device with a pan, lid and device control unit and method for controlling a cooking process

Appareil de cuisson avec un creuset, un couvercle et une commande d'appareil et procédé de commande d'un procédé de cuisson

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2011   DE 102011015974**

(43) Veröffentlichungstag der Anmeldung:
**10.10.2012   Patentblatt 2012/41**

(73) Patentinhaber: **MKN Maschinenfabrik Kurt Neubauer GmbH & Co. KG**
**38300 Wolfenbüttel (DE)**

(72) Erfinder:
• **Helm, Peter**
**38304 Wolfenbüttel (DE)**

• **Ruhe, Dirk, Dipl.-Ing. (FH)**
**38667 Bad Harzburg (DE)**

(74) Vertreter: **Strobel, Wolfgang**
**Kroher-Strobel**
**Rechts- und Patentanwälte PartmbB**
**Bavariaring 20**
**80336 München (DE)**

(56) Entgegenhaltungen:
**EP-A1- 2 345 350          CN-A- 101 623 170**
**DE-A1-102008 051 265     DE-U1- 9 414 011**
**JP-A- 2005 087 275**

**Beschreibung**

Die Erfindung betrifft ein Gargerät mit einem Tiegel, einem Deckel für den Tiegel, welcher Deckel in einer ersten Schließposition den Innenraum des Tiegels nach oben abschließt und in einer zweiten Schließposition nach oben offen lässt, mit Heizelementen und einer Gargerätesteuerung zum Garen einer Speise.

Die Erfindung betrifft ferner ein Verfahren zur Steuerung eines Garvorganges einer flüssigen oder einer hohen Flüssigkeitsanteil besitzenden Speise in einem Tiegel eines Gargerätes, welcher Tiegel einen verschließbaren Deckel aufweist

In Gargeräten, die beispielsweise einen Kochkessel oder einen Brattiegel aufweisen, werden auch flüssige Speisen und Speisen mit einem hohen Flüssigkeitsanteil zubereitet. Für diese Zubereitung werden Garvorgänge durchgeführt. Gerade bei flüssigen Speisen und Speisen mit hohen Flüssigkeitsanteilen ist es vielfach erwünscht, dass diese Speisen bei der Zubereitung bis zum Siedepunkt erhitzt werden.

Ist dieser Siedepunkt erreicht, ist es vielfach gewünscht, dass die zuzubereitende Speise für eine vorbestimmte Zeit weiterhin siedet, also die Temperatur am Siedepunkt beibehält. Dies dient zu dem Zweck, dass die zuzubereitende Speise für eine gewünschte Zeit einer bestimmten äußeren Temperatur ausgesetzt ist und zugleich sich physikalisch genau in dem Temperaturbereich aufhält, an dem ein Siedevorgang des enthaltenen Wasseranteils stattfindet.

Dabei gibt es verschiedene Formen des Siedens, die je nach Produkt oder gerade anzuwendender Garmethode unterschiedlich sein können. Der Anwender beziehungsweise Benutzer des Gargerätes, also beispielsweise ein Koch, möchte dabei die unterschiedliche Form des Siedens wählen und beeinflussen können.

Dabei spricht ein Fachmann, etwa ein Koch, von einem leichten Sieden, wenn während des Siedevorgangs nur einige wenige Dampfblasen aufsteigen. Er spricht von starkem Sieden beziehungsweise von starkem Wallen, wenn eine relativ große Zahl an Dampfblasen während des Siedevorgangs aufsteigt, so dass dadurch zugleich eine starke Zirkulation innerhalb der Flüssigkeit auftritt. Diese starke Zirkulation führt zu einer sehr unruhigen Oberfläche der flüssigen Speise.

Zwischen dem leichten Sieden und dem starken Sieden gibt es beliebig viele Zwischenstufen, die durchaus für den Anwender und Benutzer des Gargerätes von Interesse sein können, um eine von ihm gewünschte optimale Zubereitungsform anzustreben.

Bei allen derartigen Siedevorgängen beträgt die Temperatur der überwiegend wässrigen Flüssigkeit stets rund 100 °C, wobei diese Temperatur entsprechend den physikalischen Gesetzen vom herrschenden Luftdruck an dem Aufstellungsort des Gargerätes abhängt.

Die Energie wird dabei üblicherweise durch Heizelemente in die flüssigen Speisen, also in das Gargut, eingebracht. Dabei kann es sich um am Boden des Tiegels angebrachte Heizelemente handeln oder auch durch Heizelemente, die kondensierenden Dampf am oder im Tiegelmantel erzeugen und diesen in die flüssigen Speisen einbringen.

Natürlich besteht schon seit langem das Interesse, dass bei diesen Gar- und hier insbesondere Kochvorgängen Energie eingespart wird. Zu diesem Zweck werden Gargeräte, die zur Zubereitung von flüssigen Speisen dienen und hierzu etwa einen Tiegel oder Kochkessel aufweisen, schon seit längerem mit einem Deckel ausgestattet.

Aus der DE 10 2008 051 265 A1 ist beispielsweise ein Schnellkochtopf mit einem während des Garvorganges ständig aufgesetzten Deckel bekannt, wobei umfangreiche Steuerungs-, Regelungs- und Bedienvorrichtungen an dem Schnellkochtopf vorgesehen sind, um den Garprozess und das Garergebnis weiter zu optimieren. In dem Schnellkochtopf herrscht ein Überdruck während des Garvorganges, wobei die Steuerung Möglichkeiten vorsieht, mittels eines Überdruckventils einen zu hohen Überdruck und somit Gefahren zu vermeiden.

Aus der DE 94 14 011 U1 ist ein Mehrzweckkocher bekannt, bei dem eine Deckelanordnung aufklappbar vorgesehen ist. Es handelt sich um einen für Endverbraucher vorgesehenen Kocher, bei dem eine automatische Abschaltung der elektrischen Heizeinrichtung vorgesehen ist, sowie die Deckelanordnung geöffnet wird. Wird dagegen die Deckelanordnung geschlossen, wird die elektrische Heizeinrichtung eingeschaltet.

Es besteht jedoch vielfach das Erfordernis oder der Wunsch, während des Garvorgangs Zugang zum Inhalt des Tiegels oder Kochkessels und somit Zugang auch zu den darin befindlichen, gerade zubereiteten Speisen zu bekommen. Hierfür gibt es Gargeräte mit einem Deckel, der während des Garvorganges geöffnet werden kann, ohne dass dadurch der Garvorgang unterbrochen oder gestoppt wird. Dieser Deckel kann geöffnet werden, um die zuzubereitenden Speisen beziehungsweise ihre Bestandteile in das Innere des Gargerätes hineinzugeben, den Garvorgang oder Abschnitte davon zu beobachten und nach dem Zubereitungsvorgang die fertigen Speisen wieder entnehmen zu können.

Hierzu können die Deckel wie häufig üblich etwa mittels eines Scharniers mit dem Gargerät verbunden werden. Die Deckel werden dann zum Öffnen um das Scharnier geschwenkt beziehungsweise aufgeklappt.

Anders als bei geschlossenen Schnellkopftöpfen wie in der DE 10 2008 051 265 A1 oder bei mit verschlossenem Deckel heizenden Kochern wie in der DE 94 14 011 U1 wird nicht nur bei geschlossenem Deckel, sondern auch bei geöffnetem Deckel die Heizeinrichtung betrieben.

In ganz anderem Zusammenhang wird in der DE 10 2005 020 744 B3 ein Gargerät mit einer über eine Tür verschließbaren Zugangsöffnung vorgeschlagen, bei der ein Warnsignal abgegeben wird, wenn eine Tür zu lange und/oder zu weit geöffnet wird. Auch eine Anzeige dieses Öffnungswinkels und/oder der Öffnungszeitdauer der Tür wird vorgeschlagen, ebenso eine Bewegungseinrichtung, die ein automatisches Bewegen der Tür über ein Schließglied vornimmt. Die ermittelten oder angezeigten Werte sollen dann in nicht näher bestimmter Form berücksichtigt werden, etwa durch eine entsprechende Verlängerung der Garzeit.

Bei den vorliegend interessierenden Gargeräten mit einem Tiegel und einem Deckel für den Tiegel, welcher Deckel geöffnet werden kann, und weicht der Dampf anders als bei geschlossenem Deckel nicht mehr ohne Weiteres aus dem Innenraum des Gargerätes in die Umgebung. Zwar soll bei dieser Form der Speisezubereitung kein Überdruck erzeugt werden, sodass eine Entlüftung des durch den Deckel entstehenden Innenraumes nach außen vorzusehen ist, es wird aber möglich, die in dem Dampf enthaltene Energie zu einem gewissen Teil durch eine Kondensation an der Unterseite des Deckels oder in einer Kondensationsleitung zurück zu gewinnen.

Dadurch tritt zwar die gewünschte Energieeinsparung ein, da geringere Wärmeverluste entstehen, bei konstanter Energiezufuhr wird durch die zurück gewonnene beziehungsweise anders als bei geöffnetem Deckel nicht verbrauchte Energiemenge im Umkehrschluss nun der Siedevorgang beeinflusst.

Der Nutzer muss nun also aufgrund seiner Erfahrung und des von ihm vermuteten Verhaltens der Speise während des Siedevorganges überlegen, ob er vielleicht die Energiezufuhr herabsetzt, und falls ja, um welchen Betrag.

Dabei können viele Fehleinschätzungen vorgenommen werden, zumal der Nutzer, also der Koch, gerade bei geschlossenem Deckel auch keinen Blick mehr auf die in Zubereitung befindliche Speise hat und dementsprechend auf sein Gefühl oder gegebenenfalls auch Gehör angewiesen ist, mit der er die Geräusche des Siedevorganges in einer unruhigen Küchenumgebung interpretieren muss, um daraus Folgerungen ziehen zu können.

Die Deckel insbesondere bei Druckgargeräten sind sehr massiv ausgeführt, um dem auftretenden Druck standhalten zu können. Als Material scheiden daher Glas oder Kunststoff aus, da die dann erforderlich werdenden Verbindungswerkstoffe, beispielsweise Klebstoffe, den Beanspruchungen aus Druck und Temperatur nicht gewachsen sind oder sehr kostspielige Maßnahmen erforderlich werden, um diese Werkstoffe doch einsetzen zu können.

Es ist also nicht oder zumindest nur mit einem erheblichen Kostenaufwand möglich, die Deckel etwa mit Sichtfenstern auszustatten. Bei geschlossenem Deckel hat mithin der Anwender und Nutzer keine Möglichkeit, den Garvorgang zu beobachten.

Die eintretenden Fehler können jedoch unerfreulich sein. Entweder kocht die Flüssigkeit der Speise über, weil mehr Energie zugeführt wird, als sinnvoll oder angestrebt ist, oder der Siedevorgang bricht zusammen, weil nicht mehr hinreichend Energie für das Sieden der vorhandenen Flüssigkeit vorgesehen ist.

Eine gut ausgebildete und erfahrene Fachkraft ist diesen Aufgaben möglicherweise gewachsen, dafür wird jedoch gerade ihre Arbeitskraft benötigt, die für die Zubereitung oder Zusammenstellung von Speisen in der Küche an anderem Ort zur gleichen Zeit ebenfalls benötigt wird. Trotzdem können Fehler unterlaufen, erst recht natürlich einem mit dieser Aufgabe betreuten Hilfspersonal, das nicht über die hinreichende Erfahrung und die Fachkenntnisse verfügt.

Wünschenswert wäre es, wenn ein Verfahren und/oder ein Gargerät zur Verfügung stünde, mit dem einem Nutzer eine entsprechende Unterstützung seiner Zubereitung gegeben werden könnte, sodass weniger Fehler eintreten oder weniger Aufmerksamkeit und Fachkenntnisse bei der Steuerung eines solchen Garvorgangs benötigt werden.

Aus der CN 101623170 A ist ein Gargerät in Form eines Reiskochers bekannt, mit einem Tiegel, der einen Deckel aufweist. Das Gargerät weist eine Deckelpositionserfassungseinrichtung auf, die die erfassten Signale einer Gerätesteuerung übermittelt. Ziel bei diesem Reiskocher ist es, einen Energieeinsparungseffekt zu erzielen.

Aus der JP 2005087275 A ist ebenfalls ein Reiskocher bekannt mit einem Deckel, wobei der Deckel einen Tiegel bedeckt, der mittels entsprechenden Heizelementen über eine Gargerätesteuerung erwärmt werden kann. Eine Temperaturerfassungseinrichtung ist vorgesehen, die sowohl die Temperatur des Tiegels als auch des Deckels ermittelt. Die Gargerätesteuerung ist so aufgebaut, dass sie den Betrieb der Heizelemente über einen bestimmten Zeitraum abbricht, wenn die Öffnungs- und Schließerfassungseinrichtung des Deckels die Öffnung des Deckels erfasst und danach die Heizelemente durch das erfasste Signal der Tiegeltemperatur steuert.

Aus der nachveröffentlichten EP 2 345 350 A1 ist ein Gargerät bekannt, mit einem Tiegel, einem Deckel für den Tiegel, welcher Deckel in einer ersten Schließposition den Innenraum des Tiegels nach oben abschließt und in einer zweiten Schließposition nach oben offen lässt, Heizelementen, die von einer Energieversorgung gespeist werden, einer Gargerätesteuerung zum Garen einer Speise, und einem Sensor, welcher die aktuell eingenommene Schließposition des Deckels auf dem Tiegel erkennt und mit der Gerätesteuerung in kabelgestützter oder kabelloser Informationsverbindung steht, wobei die Gerätesteuerung so aufgebaut ist, dass sie die Energieversorgung für die Heizelemente des Tiegels regelt oder steuert, und die Steuerung oder Regelung der Heizelemente abhängig von der Information des Sensors erfolgt, wobei in der Gerätesteuerung Informationen über die Energieverluste beim Siedevorgang einer flüssigen oder hohe Flüssigkeitsanteile aufweisenden Speise hinterlegt sind, welche Energieverluste einerseits für einen Schließzustand mit geöffnetem Deckel und andererseits mit geschlossenem Deckel vorgesehen und/oder beibehalten einer bestimmten Siedestärke ist jedoch mit Lehre der EP 2 345 350 A1 nicht möglich.

Der vorliegenden Erfindung liegt die Aufgabe zugrunde, dem Nutzer des Gargeräts eine weitere Unterstützung dahingehend zu geben, dass mittels der Gerätesteuerung des Gargerätes ein Garvorgang, beispielsweise weiteres schwaches Sieden einer flüssigen oder hohe Flüssigkeitsanteile aufweisenden Speise, in Abhängigkeit von der Stellung des Deckels des Gargeräts automatisch und insbesondere ohne Einwirkung des Benutzers vollzogen werden kann.

Diese Aufgabe wird durch die Merkmale des Patentanspruchs 1 gelöst.

Erfindungsgemäß zeichnet sich das Gargerät dadurch aus, dass in Abhängigkeit der Energieverluste die Gerätesteuerung die Energieversorgung derart steuert, dass ein im Wesentlichen konstanter Siedevorgang beibehalten wird.

Der vorliegenden Erfindung liegt weiterhin die Aufgabe zugrunde, ein entsprechendes Verfahren vorzuschlagen, mit dem die oben genannten Ziele erfüllt werden können.

Bei einem gattungsgemäßen Verfahren wird diese Aufgabe mittels der Erfindung dadurch gelöst, dass die Speise bis zum Siedepunkt aufgeheizt wird, dass zumindest ab dem Erreichen des Siedepunktes der Schließzustand des Deckels auf dem Tiegel kontinuierlich oder in Abständen ermittelt wird, dass abhängig von dem ermittelten Schließzustand die Energiezufuhr zu der in dem Tiegel befindlichen Speise so gesteuert wird, dass die Siedestärke der Speise unabhängig von der Schließposition des Deckels auf dem Tiegel ist.

Durch die Erfindung werden diese Wünsche erfüllt. Eine ausgebildete Fachkraft wird entlastet und muss zur Durchführung eines solchen Verfahrens beziehungsweise bei der Bedienung eines solchen Gargerätes deutlich weniger Aufmerksamkeit auf den Siedevorgang richten und kann trotzdem in energiesparender Weise den Deckel während der Zubereitung und des Siedevorgangs schließen.

Auch Hilfspersonal kann nun dazu eingesetzt werden, da Fehler vermieden werden und die zuzubereitende flüssige Speise beziehungsweise einen hohen Flüssigkeitsanteil aufweisende Speise akkurat mit so viel Energie während des Siedevorganges versorgt wird, wie es dem vom Nutzer angestrebten Zweck entspricht.

Die Erfindung macht davon Gebrauch, dass nicht mehr wie bisher einfach aufgrund der Fachkenntnisse und Erfahrung während des Siedevorganges die gerade zweckentsprechend scheinenden Maßnahmen getroffen werden, sondern dass die tatsächlich während des Siedevorgangs auftretenden Energiebilanzen und Energieströme berücksichtigt werden, über die sich der Fachmann bisher keine Gedanken gemacht hat.

Durch die Erfindung wird es möglich, ganz gezielt und präzise die Heizleistung mit steigendem Öffnungswinkels des Deckels zu erhöhen, um die durch den ausströmenden Wasserdampf entstehenden Wärmeverluste auszugleichen und somit den Garvorgang so fortzuführen, als wäre der Deckel nicht geöffnet worden. Alternativ kann der Vorgang auch so betrachtet werden, als wäre der Garvorgang bei geöffnetem Deckel der Normalfall und das Schließen des Deckels eine Ausnahmesituation für die erfindungsgemäß die Heizleistung entsprechend so gedrosselt wird, dass die Energiezufuhr dem Garvorgang bei geöffnetem Deckel entspricht.

Eine Informationsverbindung des Sensors zur Gerätesteuerung beziehungsweise umgekehrt kann sowohl kabelgestützt als auch kabellos erfolgen. Beide Alternativen haben jeweils ihre Vorzüge.

Erfindungsgemäß ist der Nutzer nun nicht mehr darauf angewiesen, seinen Garvorgang bei einem durch das Gargerät vorgegebenen geschlossenen oder geöffneten Deckel zu betreiben und andere Varianten eventuell als Notlösung zuzulassen, die vorübergehend betrieben werden darf, sondern es kann ganz gezielt und bewusst ein bestimmter Abschnitt des Garvorganges mit geöffnetem Deckel, ein anderer Abschnitt des Garvorganges bei geschlossenem Deckel und ein dritter Abschnitt des Garvorganges bei einem teilweise geöffnetem Deckel durchgeführt werden, wenn dies aus beliebigen, beispielsweise durch die spezielle Zubereitungsform der Speise bedingten oder persönlichen Vorlieben des Nutzers bedingten Gründen bevorzugt wird; die Wahl des Zustandes wird also von der Speise oder dem Nutzer vorgegeben und nicht mehr durch das Gerät. Gleichwohl findet eine optimierte Energiezuführung statt, die dies in vollem Umfange berücksichtigt.

Bei herkömmlichen Gargeräten wie etwa in der DE 94 14 011 U1, der DE 10 2005 020 744 B3 oder der DE 10 2008 051 265 A1 beschrieben, ist dies nicht möglich; die dort beschriebenen Garvorgänge sind mit geöffnetem Deckel beziehungsweise geöffneter Tür nicht durchführbar, während erfindungsgemäß der Garvorgang auf Wunsch des Nutzers aus mit dauerhaft offenen oder jedenfalls für einen längeren Zeitraum zumindest teilweise geöffnetem Deckel durchführbar ist.

Von besonderem Interesse ist der Zeitpunkt, an dem die Flüssigkeit der flüssigen Speise den Siedepunkt erreicht hat. Die Stärke des nun folgenden Siedevorganges, also das leichte Sieden oder starke Sieden, wird durch die in die Flüssigkeit von diesem Zeitpunkt an eingebrachte Energiemenge bestimmt.

Diese Energie wird, wie oben erwähnt durch Heizelemente zugeführt.

Der Siedepunkt selbst ist messtechnisch schwer zu erfassen. Auf Grund der geringen Temperaturdifferenz auch zwischen den verschiedenen oben erwähnten Siedearten und der Abhängigkeit der Temperatur am Siedepunkt beispielsweise vom Luftdruck ist es kaum möglich oder zumindest sehr kompliziert, auf der Basis beispielsweise einer Temperaturmessung eine zuverlässige Steuerung und/oder Regelung zu realisieren.

Durch die Erfindung kann jedoch dieses Problem umgangen werden, denn diese wie erwähnt recht schwer zu erfassende und auch relativ ungenaue Messung ist nicht erforderlich, um die erfindungsgemäßen Schritte durchzuführen und Vorteile zu erreichen.

Neben dieser in die flüssigen Speisen eingebrachten Energiemenge entstehen natürlich auch Energieverluste, etwa in Form von Wärmeleitung durch den Mantel des Tiegels nach außen, durch die Konvektion von warmer und feuchter Luft am Flüssigkeitsspiegel der flüssigen Speise und schließlich auch durch Strahlung. Weiter wird auch ein Teil der zugeführten Energie dazu genutzt, Teile der flüssigen Speise in Dampf umzuwandeln, die dann in Form der oben schon erwähnten Blasen die Flüssigkeit verlässt.

Wird nun der Deckel geschlossen, so können die durch Konvektion und durch Strahlungsverlust verursachten Energieverluste deutlich verringert werden und somit insgesamt Energie eingespart werden.

Wie Messungen zeigen, liegen die Energieunterschiede in der Praxis tatsächlich bei Faktoren, die etwa die doppelte oder dreifache Energiezufuhr bei geöffnetem Deckel verglichen mit einem geschlossenen Deckel erfordern.

Die genauen Verhältnisse sind komplex, wie es sich jedoch herausgestellt hat, sind sie bei bekannten Randbedingungen tatsächlich etwa im Voraus zu ermitteln. Diese Ermittlung kann nicht der Nutzer während der Zubereitung der Speisen durchführen, wohl aber kann aufgrund des jeweils ähnlichen Verhaltens von flüssigen oder überwiegend Flüssigkeit enthaltenden Speisen deren Verhalten bei geschlossenem, geöffnetem oder auch teilweise geöffnetem Deckel in Tests ermittelt werden. Diese Ermittlungen werden nun mit einer automatischen Erkennung verknüpft, die feststellt, ob der Deckel geöffnet ist oder ob der Nutzer ihn geschlossen hat. In weiteren Ausführungsformen kann auch der Öffnungsgrad festgestellt werden, da viele Nutzer den Öffnungsgrad auch zwischen ganz geschlossen und fast geschlossen variieren, um noch einen leichten Spalt zur Beobachtung des Zubereitungsvorganges offen zu lassen.

Wird dieser Öffnungsgrad etwa mittels eines Sensors festgestellt, so kann in einer Gargerätesteuerung diese wichtige Information genutzt werden, um dort vorhandene, aus vorab durchgeführten Tests ermittelte Werte über die gewünschte und benötigte Energie bei den verschiedenen Deckelöffnungszuständen abzurufen und zur Steuerung des Siedevorgangs zu nutzen. Dabei kann auch automatisch berücksichtigt werden, ob nun die Stärke des Siedevorgangs ein leichtes Sieden oder ein starkes Wallen sein soll.

In weiteren Ausführungsformen kann nun im Umkehrschluss auch gesteuert werden, dass der Deckel mehr oder weniger oder ganz geschlossen wird, nachdem ein bestimmter Zustand erreicht worden ist, sodass der Nutzer auch davon entlastet wird. Dabei kann dem Nutzer die Möglichkeit eingeräumt werden, hier durch einen entsprechenden Eingriff, beispielsweise durch eine Betätigung einer Taste oder ein Tippen auf einen Touch-Screen ein anderes Verhalten herbei zu führen, wenn er beispielsweise einen Blick in die Speise werfen möchte, obwohl der Deckel gerade geschlossen wird.

Neben der beschriebenen automatisierten Entlastung des Nutzers besteht in bevorzugten Ausführungsformen zusätzlich auch die Möglichkeit, dass der Nutzer selbst auch seinen persönlichen Einschätzungen und Wünschen folgen kann. So kann er beispielsweise aus den ihm gebotenen Informationen auf einer Anzeigevorrichtung zu dem Schluss kommen, dass er abweichend von den automatischen und vom Gargerät selbst vorgeschlagenen und durchgeführten Steuerungsvorgängen doch noch etwas mehr oder weniger Energie einsetzen möchte, um einen bestimmten Effekt herbeizuführen.

Es ist ferner bevorzugt, wenn im Tiegel ein Sensor angeordnet ist, welcher die Siedeintensität detektiert, und wenn der Sensor mit der Gerätesteuerung in kabelgestützter oder kabelloser Informationsverbindung steht. Besonders bevorzugt ist es dabei, wenn der oder ein weiterer Sensor ein optisches Beobachtungselement insbesondere in Form einer Videokamera ist und wenn ein oder mehrere Beleuchtungselement(e) innerhalb des Innenraums des Tiegels angeordnet sind.

Das zusätzliche Vorsehen von Sensoren und insbesondere von optischen Beobachtungselementen wie etwa Videokameras ermöglicht dem Nutzer eine noch bessere Kontrolle des Vorgehens. Es geht dabei vor allem darum, dass der Nutzer beobachten kann, wie die automatische Regelung des Gargerätes sich tatsächlich auf den Garvorgang auswirkt.

Möglich ist es natürlich auch, über diese optischen Beobachtungselemente und/oder andere Sensoren eine Regelung des Garvorganges (zusätzlich) vorzunehmen. Dabei ist aber zu beachten, dass eine Regelung über derartige Sensoren oder optische Beobachtungselemente stets mit einer gewissen Zeitverzögerung erfolgt, denn sie orientiert sich ja an der Wirkung und regelt die Parameter erst bei einer Abweichung von beabsichtigtem Vorgehen nach. Die erfindungsgemäße Vorgehensweise, unmittelbar die Schließposition des Deckels zur Regelung einzusetzen, ist daher von großem Vorteil.

Man erkennt dies insbesondere dann, wenn man sich eine große Menge Gargut vorstellt, das mit einer entsprechenden Reaktionsträgheit den geregelten Schritten folgt. Als Ergänzung oder Kontrolle ist der Einsatz dieser Sensoren und optischen Beobachtungselemente jedoch von Vorteil.

Besonders bevorzugt ist es bei einem Verfahren, wenn in der Gerätesteuerung Daten über eine Referenzsiedestärke hinterlegt werden, wenn die aktuellen Daten zum laufenden Siedevorgang mit den gespeicherten Daten dieser Referenzsiedestärke kontinuierlich verglichen werden, und wenn die Gerätesteuerung die Energiezufuhr zu der in dem Tiegel befindlichen Speise in Abhängigkeit von den Daten der gewünschten und der Referenzsiedestärke regelt.

Eine Möglichkeit zur Realisierung eines solchen Verfahrens entsteht insbesondere dann, wenn wie in einer anderen bevorzugten Ausführungsform bereits vorgeschlagen eine Kamera beziehungsweise Videokamera in einem beleuchteten Innenraum eines Tiegels vorgesehen ist. Diese Kamera kann die Siedeintensität des Gargutes aktuell erfassen. Das entsprechende Bild wird auf eine Anzeigevorrichtung übertragen. Der Anwender oder Nutzer kann dann ohne den Deckel zu öffnen bereits erkennen, ob die von ihm gewünschte Siedeintensität gerade eingehalten wird.

In bevorzugten Ausführungsformen hiervon werden in der Gerätesteuerung Referenzbilder für verschiedene Siedeintensitäten abgelegt. Alternativ oder zusätzlich kann der Nutzer im Siedeprozess auch ein Wunschbild oder einen Screenshot speichern. Die Gerätesteuerung hält den Garvorgang dann durch die Informationen des Sensors für die Siedestärke oder durch eine Bildauswertung in dem gewählten Bereich.

In einer weiteren bevorzugten Ausführungsform des Verfahrens ist vorgesehen, dass die Gerätesteuerung nach dem Erreichen einer gewünschten Siedeintensität die weitere Energiezufuhr so regelt, dass die Siedeintensität für einen vorgegebenen oder aktuell einstellbaren Zeitraum beibehalten wird.

Hierfür gibt es verschiedene bevorzugte Möglichkeiten. So kann bei einem eingehenden Steuerbefehl automatisch der Deckel geschlossen werden und gleichwohl die zu diesem Zeitpunkt erreichte Siedeintensität durch eine entsprechende Änderung der Energiezufuhr seitens der Gerätesteuerung genau diese gewünschte optimale Siedeintensität beibehalten werden.

Möglich ist es auch, dass dem Nutzer die Möglichkeit angeboten wird, die von ihm ausgewählte Siedeintensität für einen gerade aktuell gewünschten Zeitraum aufrecht zu erhalten. Dabei kann auch vorgesehen werden, dass dieser Zeitraum auf einen üblichen Wert voreingestellt wird und der Nutzer lediglich Abweichungen von diesem voreingestellten Erfahrungswert eingeben muss.

Nach Ablauf der vorgegebenen oder eingestellten Zeit wird dann die Siedeintensität gedrosselt. Dadurch kann vermieden werden, dass bei Fehlbedienungen oder Ablenkung des Nutzers der Siedevorgang mit hoher Siedeintensität über einen zu langen Zeitraum durchgeführt wird.

Ebenso ist in weiteren Ausführungsformen vorgesehen, dass die Gerätesteuerung mittels optischer oder akustischer Meldeeinrichtungen den Nutzer auf die bevorstehende oder gerade die durchgeführte Drosselung der Siedeintensität informiert.

In einer weiteren bevorzugten Ausführungsform ist vorgesehen, dass die Gerätesteuerung so aufgebaut ist, dass sie aus der Information des Sensors und den hinterlegten Informationen über die Energieverluste beim Siedevorgang eine Information betreffend den Unterschied des Energieverbrauchs bei geschlossenem und geöffnetem Deckel ermittelt und auf der Anzeigevorrichtung anzeigt.

Auf diese Weise entsteht eine Rückmeldung über ein mögliches Sparpotential und/oder über eine bereits eingesparte Energiemenge von der Gerätesteuerung an den Benutzer. So könnte beispielsweise eine Meldung auf einer Anzeigevorrichtung für den Benutzer angezeigt werden, nachdem der Benutzer eine gewünschte Siedestärke ausgewählt hat. Diese Anzeige könnte beispielsweise lauten "Bei geschlossenem Deckel reduziert sich der Energieverbrauch auf etwa ein Drittel". Natürlich wäre auch eine Anzeige in Energieeinheiten möglich, beispielsweise in kWh. Anbieten würde sich zum Beispiel auch eine Meldung am Ende eines Garvorganges, beispielsweise mit dem Text "durch Garen bei geschlossenem Deckel haben sie 10 kWh eingspart."

Auf diese Weise kann dem Benutzer des Gargerätes ein permanenter Anreiz gegeben werden, möglichst energiesparend und damit für ihn natürlich auch kostensparend zu garen.

Weitere bevorzugte Ausführungsformen sind in den Unteransprüchen angegeben.

Im Folgenden wird anhand eines Beispiels eine Ausführungsform der Erfindung näher erläutert. Es zeigt:

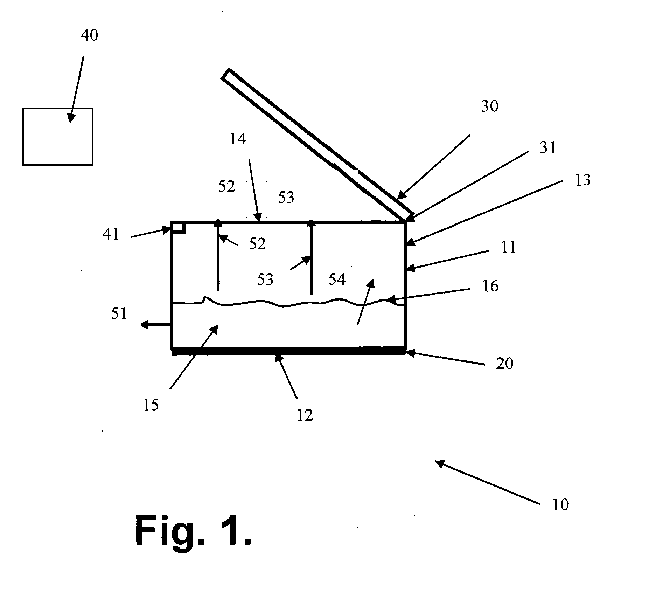

**Figur 1**      eine schematische Ansicht einer Ausführungsform eines erfindungsgemäßen Gargerät.

Das in der **Figur 1** dargestellte Gargerät 10 weist einen Tiegel 11 auf, der hier rein schematisch im Schnitt dargestellt ist. Man sieht, dass der Tiegel 11 in diesem Ausführungsbeispiel ungefähr zylindrisch ist und einen Boden 12 sowie Seitenwände 13 besitzt.

In dem Tiegel 11 befindet sich ein Gargut, also eine zuzubereitende Speise 15, bei der es sich hier um eine überwiegend flüssige Speise handelt, beispielsweise eine Suppe. Man erkennt den Flüssigkeitsspiegel 16 der flüssigen Speise 15 im Tiegel 11.

Um die flüssige Speise 15 im Tiegel 11 zubereiten zu können, ist insbesondere eine Energiezufuhr erforderlich, um die Speise 15 erhitzen zu können. Zu diesem Zweck ist ein Heizelement 20 am Boden 12 des Tiegels 11 angeordnet und hier rein schematisch in der Figur 1 angedeutet.

Der Tiegel 11 mit seinen Seitenwänden 13 ist rundum gleich hoch und besitzt oben einen Rand 14. Dieser Rand 14 liegt deutlich über dem Flüssigkeitsspiegel 16 der Speise 15 im Inneren des Tiegels 11.

Auf den Rand 14 des Tiegels 11 kann ein Deckel 30 aufgelegt werden. Dieser Deckel 30 schließt nach dem Auflegen den Innenraum des Tiegels 11 innerhalb der Seitenwände 13 nach oben ab. Um das Auflegen des Deckels 30 zu erleichtern, kann dieser wie in dem dargestellten Ausführungsbeispiel angedeutet mittels eines Scharniers 31 am Rand 14 des Tiegels 11 befestigt sein. Es handelt sich dann bei dem Deckel 30 um einen Klappdeckel, der durch einen nicht dargestellten Griff auf der dem Scharnier 31 gegenüberliegenden Seite gegriffen und auf- und zugeklappt werden kann.

Im geöffneten Zustand erlaubt die entstehende Öffnung ein Hineingeben der Speise und eventuell auch von Zutaten zu der Speise 15 in Form von Gewürzen und weiterer Flüssigkeit durch die Öffnung, die von dem umlaufenden Rand 14 gebildet wird, in das Innere des Tiegels 11.

Das Öffnen und Schließen des Deckels 30 kann auch durch einen (nicht dargestellten) Motor mittels eines Antriebs erfolgen, insbesondere bei größeren oder gewerblich genutzten Gargeräten.

Vorgesehen ist außerdem eine Gerätesteuerung 40. Diese Gerätesteuerung 40 kann unter anderem für das Steuern der Heizleistung der Heizelemente 20 am Boden des Tiegels 11 verantwortlich sein, ebenso aber auch für die Steuerung des Antriebes für das Öffnen und Schließen des Deckels 30, gegebenenfalls auch für das Steuern eines eventuell vorgesehenen Umrührwerks im Inneren des Tiegels 11 und für weitere Aufgaben, auf die auch noch im Folgenden Bezug genommen wird.

Vorgesehen ist weiterhin auch ein Deckelsensor 41 benachbart zum Rand 14 des Tiegels 11. Unter dem Begriff "Deckelsensor" kann beispielsweise ein Abstandssensor verstanden werden, der den Abstand zwischen dem äußeren Rand des Deckels 30 und dem unmittelbar benachbarten Abschnitt des Randes 14 des Tiegels 11 feststellt. Dies kann als "Ja/Nein"-Feststellung beispielsweise bei einem zuzuschiebenden Deckel 30 mittels eines Reed-Kontaktes erfolgen, aber auch mittels eines Infrarotmessgerätes einfachster Ausführungsform oder mit einem anderen für die Ermittlung von Abständen geeigneten System.

Sofern es nicht darauf ankommt, den Öffnungsgrad festzustellen, genügt ja, wie im Beispiel des Reed-Kontaktes ein Sensor, der das Aufliegen beziehungsweise das Nichtaufliegen des Deckels 30 auf dem Rand 14 dies Tiegels feststellt.

Möglich ist es auch, diesen Deckelsensor 41 in einen Motor oder eine Antriebssteuerung zu integrieren, die das Schließen und Öffnen des Deckels 30 etwa motorisiert vornimmt. Dann kann aus dem Bewegungsverhalten des Deckels 30 auf den Schließungsgrad beziehungsweise die Schließposition (offener Tiegel oder geschlossener Tiegel) des Deckels 30 auf dem Rand 14 des Tiegels 11 geschlossen werden. In diesem Falle würde dieser Antrieb selbst als Deckelsensor 41 fungieren.

Dieser Deckelsensor 41 stellt fest, ob der Deckel 30 geschlossen ist oder geöffnet ist. In bestimmten Ausführungsformen kann der Deckelsensor 41 auch den Öffnungsgrad des Deckels 30 feststellen. Der Deckelsensor 41 ist mit der Gerätesteuerung 40 verbunden. Diese Verbindung kann auch kabellos, etwa durch eine Infrarot- oder Funkübertragung erfolgen. Die Aufgabenstellung des Deckelsensors 41 wird noch im Folgenden näher erläutert werden.

Betrachtet man sich nun das Gargut, beziehungsweise die Speise 15 im Inneren des Tiegels 11 näher, so sieht man, dass ihr über die Heizelemente 20 Energie zugeführt wird, während Energie in verschiedenen Formen die Speise 15 verlassen.

Dabei sei im Folgenden jetzt nur der Zeitbereich betrachtet, in welchem sich die Speise 15 im Inneren des Tiegels 11 auf Siedetemperatur befindet. Der Zubereitungsvorgang der Speise 15 sei also bereits soweit fortgeschritten, dass über die Heizelemente 20 eine Erwärmung der Speise 15 auf eine Siedetemperatur stattgefunden hat, wobei diese Siedetemperatur etwa 100 °C beträgt. Schwankungen um den mittleren Betrag von 100 °C herum sind vom Luftdruck am Aufstellungsort des Gargerätes 10 abhängig und daher möglich.

Hat nun die Speise 15 beziehungsweise der Flüssigkeitsanteil dieser Speise 15 die Siedetemperatur erreicht, so wird hier bei einem weiteren Betrieb der Heizelemente 20 auch entsprechende Wärmeenergie weiterhin zugeführt.

Zugleich verliert die Speise 15 beziehungsweise ihr Flüssigkeitsanteil Energie etwa durch Wärmeleitung durch die Seitenwand 13 des Tiegels 11 hindurch, was hier in Form des Pfeiles 51 für $E_{Leitung}$ angedeutet ist.

Ein weiterer Energieverlust entsteht durch Konvektion aus der Flüssigkeit der

Speise 15 nach oben in die Atmosphäre, was hier durch den Pfeil 52 für $E_{Konvektion}$ angedeutet ist.

Als dritte Verlustgröße ist die Strahlungsenergie zu verzeichnen, welche durch Wärmestrahlung ebenfalls durch den Flüssigkeitsspiegel 16 der Speise 15 nach oben abgegeben wird, was hier durch den Pfeil 53 für $E_{Strahlung}$ angedeutet ist.

Schließlich benötigt der Siedevorgang selbst Energie, denn es werden Teile der Flüssigkeit der Speise 15 in Dampf umgewandelt, welcher in Form von Blasen die Flüssigkeit der Speise 15 verlässt. Dieser Zusammenhang ist durch den Pfeil 54 für $E_{Siede}$ in der Figur 1 angedeutet.

Die zugeführte Heizenergie $E_{Heiz}$ entspricht mithin der Summe aus den angegebenen Verlusten und der für den Siedevorgang selbst eingesetzten Energie. Es gelten mithin folgende Zusammenhänge:

$$(1) \quad E_{Heiz} = E_{Verlust} + E_{siede}$$

$$(2) \quad E_{Verlust} = E_{Leitung} + E_{Konvektion} + E_{Strahlung}$$

Erhöht man nun die zugeführte Menge an Heizenergie, so erhöht sich ja nicht mehr die Temperatur der Speise 15, denn diese bleibt bei der Siedetemperatur von etwa 100 °C wie erwähnt.

Stattdessen aber steht mehr Energie für den Siedevorgang selbst zur Verfügung. Es können also mehr Flüssigkeitsanteile der Speise 15 in Dampf umgewandelt werden, die entsprechend innerhalb der Speise 15 bis an den Flüssigkeitsspiegel 16 aufsteigen und dort einen starken Siedevorgang anzeigen, insbesondere mit erhöhter Zirkulation der Speise 15 selbst und damit die Intensität dieses Vorganges. $E_{siede}$ ist also ein Wert, der für den Anwender und Benutzer des Gargerätes sehr interessant ist, da er eine konkrete Speise 15 stets mit einer bestimmten Siedestärke, also mit einer bestimmten, von ihm gewünschten Intensität gerade dieses Siedevorganges zubereiten möchte.

Der Benutzer kann also mit der Steuerung der von ihm über die Heizelemente 20 zugeführten Energiemenge grundsätzlich diese Siedestärke unter Berücksichtigung der vorgenannten Formeln einstellen.

Je nach dem gewünschten Kochvorgang beziehungsweise der zuzubereitenden Speise 15 ist also eine unterschiedliche Stärke dieses Siedevorganges und damit der Größe $E_{Siede}$ erforderlich oder jedenfalls wünschenswert.

Andererseits ist es im Hinblick auf einen möglichst geringen Energieverbrauch jedoch gewünscht, möglichst wenig Heizenergie $E_{Heiz}$ über die Heizelemente 20 in die Speise 15 einzutragen.

Es besteht nur die Möglichkeit, bei dem Gesamtvorgang der Zubereitung Energie dadurch zu sparen, dass man den Deckel 30 auf dem Rand 14 des Tiegels 11 schließt. Man klappt also den Deckel 30 mittels des Scharniers 31 zu. Natürlich kann auch ein zuschiebbarer Deckel oder eine andere Konstruktion eingesetzt werden.

Durch dieses Schließen des Deckels 30 werden der durch die Konvektion verursachte Wärmeverlust je Konvektion und der durch die Strahlung aus der Speise 15 durch den Flüssigkeitsspiegel 16 nach oben entstehende Strahlungsverlust $E_{Strahlung}$ deutlich verringert. Die mittels der Pfeile 52 und 53 angedeuteten Energieverluste entfallen beziehungsweise sind deutlich schwächer. Durch diese Maßnahme kann also erheblich Energie eingespart werden, was dem Benutzer auch aus seiner täglichen Praxis bekannt ist.

Zu berücksichtigen ist natürlich, dass üblicherweise beim Schließen des Deckels 30 auf dem Rand 14 des Tiegels 11 der Innenraum des Tiegels nicht etwa druckdicht gegenüber der Umgebung verschlossen werden soll. Der Tiegel 11 soll auch bei geschlossenem Deckel 30 keinen Druck aufbauen, da dann der Siedevorgang innerhalb der Flüssigkeit der Speise 15 sich deutlich anders gestalten würde. Hierzu wird entweder der Deckel 30 nicht vollständig geschlossen, sondern man lässt ihn einen Spalt oder eine vorgesehene Öffnung offen, oder man sieht eine (nicht dargestellte) Fluid-Leitung vor, die den beim weiteren Garvorgang entstehenden überschüssigen Dampf in die Umgebung abführt.

Es ist dabei möglich, diesen Dampf durch eine zusätzliche, hier nicht dargestellte Einrichtung zu kondensieren und ihr die latente Wärme zu entziehen. Die dadurch mögliche Modifizierung der oben dargestellten Energiebilanz wird hier nicht näher betrachtet.

Üblicherweise wird also nach dem Ankochen und einer eventuell weiteren Behandlung während des Aufheizens der Speise 15 dann spätestens beim Erreichen des Siedepunktes durch den Bediener der Deckel 30 geschlossen, um die wie vorbeschrieben mögliche Energieeinsparung zu realisieren.

Durch die erwähnte Reduzierung des Wärmeverlustes durch Reduzierung von Strahlung und Konvektion steht nun ein höherer Anteil der zugeführten Heizenergie $E_{Heiz}$ von den Heizelementen 11 für den Siedevorgang $E_{Siede}$ zur Verfügung. Bei gleicher zugeführter Heizenergie $E_{Heiz}$ ist mithin der Siedevorgang nun deutlich stärker. Es ergeben sich nunmehr die Gleichungen

$$(3) \quad E_{siede\ Deckel\ auf} = E_{Heiz} - (E_{Leitung} + E_{Konvektion} + E_{Strahlung})$$

$$(4) \quad E_{siede\ Deckel\ zu} = E_{Heiz} - E_{Leitung}$$

Was bedeutet, dass die für das Sieden zur Verfügung stehende und in den Siedevorgang eingetragene Energie deutlich stärker ist, als dies kochtechnisch eigentlich erwünscht und eingestellt war, bevor der Deckel 30 geschlossen wurde.

Dabei wird davon ausgegangen, dass bei geschlossenem Deckel 30 die Werte für $E_{Konvektion}$ und $E_{Strahlung}$ in der Praxis tatsächlich nahezu 0 betragen.

Die auftretenden Energieunterschiede sind in der Praxis durchaus erheblich und keineswegs zu vernachlässigen. Die für den Siedevorgang zur Verfügung stehende Energie $E_{Siede}$ liegt in der Praxis um einen Faktor von zwei bis drei höher, wenn der Deckel 30 geschlossen ist, verglichen mit einem Zustand bei geöffneten Deckel.

Das hat zur Folge, dass der Benutzer des Gargerätes für den Fall, dass er eine bestimmte Stärke des Siedevorganges beibehalten möchte, die zugeführte Menge an Heizenergie von den Heizelementen 11 neu wählen muss. Er muss also im Stand der Technik die zugeführte Menge an Energie um die entfallenden Werte von $E_{Konvektion}$ und $E_{Strahlung}$ reduzieren.

Hierbei liegt nun für den Fachmann das Problem darin, dass er durch den geschlossenen und üblicherweise nicht durchsichtigen Deckel 30 hindurch die Stärke des Siedevorganges gar nicht genau beurteilen kann. Er muss also mittels Versuch und Irrtum beziehungsweise aufgrund seiner fachlichen Erfahrung heraus eine neue Einstellung für die zugeführte Heizenergie finden, ohne ganz genau die aktuelle Zustandsänderung beurteilen zu können. Täuscht er sich nun oder gelingt ihm dies nicht rasch genug, so wird das Garergebnis unter Umständen deutlich verschlechtert. So könnte etwa der Garvorgang zu einem nicht optimalen Ergebnis führen, da der Siedevorgang aufgrund nicht mehr ausreichend zugeführter Heizenergie $E_{Heiz}$ zusammengebrochen ist, oder im anderen Fall kocht die Flüssigkeit der Speise 15 unter Umständen so stark, dass diese überkocht, wenn zu viel Heizenergie zugeführt wird.

Zu berücksichtigen ist dabei, dass bei professionellen und gewerblich eingesetzten Kochgeräten die Flüssigkeitsmenge der Speise 15 durchaus bis zu 500 Litern und auch mehr betragen kann. Bei derartigen Flüssigkeitsmengen kann es schon aufgrund der hohen thermischen Trägheit des Gargutes, also der Speise 15, durchaus langwierig und mühsam sein, eine geeignete Einstellung zu finden.

Erfindungsgemäß ist es jedoch vorgesehen, dass ein Deckelsensor 41 oder der Antrieb für die Schließbewegung des Deckels 30 selbst erkennt, wie der Öffnungszustand des Deckels 30 ist.

Diese Information, ob der Deckel 30 geöffnet oder geschlossen ist, wird an die Gerätesteuerung 40 übermittelt. Die Gerätesteuerung 40 besitzt in ihr hinterlegte Parameter, die den Siedevorgang in Abhängigkeit der Position des Deckels 30 steuern. Diese Parameter können vorab beim Hersteller des Gargerätes 10 in Laborversuchen einmalig und eindeutig ermittelt und dann fest in einem Permanentspeicher innerhalb der Gerätesteuerung 40 hinterlegt werden.

Mit diesen erwähnten Versuchen wird ermittelt, welche Menge an Energie erforderlich ist, um die einzelnen, möglicherweise von Benutzern und Anwendern gewünschten Siedestufen einer Speise 15 im Inneren des Tiegels 11 zu erreichen.

Diese ermittelte Menge an Energie wird jeweils für einen geöffneten Deckel 30 und für einen geschlossenen beziehungsweise gemäß den oben erwähnten Randbedingungen nahezu geschlossenen Deckel 30 ermittelt. Diese Werte sind beispielhaft in der folgenden Tabelle 1 für ein Ausführungsbeispiel der Erfindung angegeben.

|  | Leichtes Sieden | Mittleres Sieden | Starkes Sieden |
|---|---|---|---|
| Deckel auf | 5 kW | 8 kW | 15 kW |
| Deckel zu | 2 kW | 3 kW | 5 kW |

Tabelle 1 zeigt in einem vereinfachten Beispiel für diesen Tiegel 11 mit angenommenen 100 Litern Inhalt für eine typische Speise 15, welche Leistungen zugeführt werden müssen, um verschiedene Siedestärken 15 zu erzielen. Natürlich ist diese Leistung zu einem erheblichen Teil von der Größe der Flüssigkeitsoberfläche der Speise 15 abhängig. Man sieht allerdings auch, welche sehr erhebliche Energieeinsparung eintritt, wenn der Deckel 30 geschlossen ist.

Möchte der Benutzer des Gargerätes 10 nun einen Kochvorgang durchführen, so wählt er dabei unter anderem eine Siedestärke aus. Hierzu kann ihm die Gerätesteuerung 40 mehrere Siedestärken vorschlagen, etwa die drei oben genannten Möglichkeiten eines leichten Siedens, eines mittleren Siedens und eines starken Siedens. Dieser Vorschlag kann auf einem Display oder auch in anderer Form dem Benutzer zugänglich gemacht werden. Der Benutzer kann nun die Auswahl treffen, entweder auf einem Touchscreen, durch Betätigung von Tasten oder auch mittels eines Reglers, der zwischen den verschiedenen Siedestärken wählt oder auch eine stufenlose oder in Stufen schaltbare Auswahl ermöglicht.

Wird nun nach Einfüllen der Zutaten für die Speise 15 das Gargerät 10 gestartet, wird zunächst die Speise 15 im Tiegel 11 auf die Siedetemperatur geheizt.

Dabei ist es durchaus sinnvoll, auch den aktuellen Luftdruck zu messen und der Gerätesteuerung 40 zu übermitteln und die Zielgröße für die Siedetemperatur entsprechend abhängig davon zu berechnen. Dadurch wird es möglich, dass auch bei einer Aufstellung des Gargerätes 10 deutlich oberhalb der Meereshöhe die Zieltemperatur eindeutig und automatisch erreicht wird.

Nachdem nun die Flüssigkeit der Speise 15 ihren Siedepunkt erreicht hat, wird automatisch eine Leistung für die Heizelemente 20 durch die Gerätesteuerung 40 hervorgerufen, die der vom Benutzer gewählten Siedestärke entspricht. Diese Leistung wird durch die Heizelemente 20 nun über den Boden 12 des Tiegels 11 der Speise 15 zugeführt.

Kontinuierlich oder auch in bestimmten Zeitabständen prüft die Gerätesteuerung 40 in der dargestellten Ausführungsform mittels des Deckelsensors 41 oder in anderen Ausführungsformen anhand des Antriebes der Deckelbewegung, ob der Deckel 30 des Tiegels 11 sich in offener oder in geschlossener Position befindet, gegebenenfalls auch, welcher Öffnungsgrad gerade eingenommen wird.

Die entsprechende benötigte und gewünschte Energiemenge entsprechend der Tabelle 1 oben wird nun entsprechend dieser ermittelten Position von den Heizelementen 20 dem Tiegel 11 zugeführt.

Das bedeutet, dass die Gerätesteuerung 40 in den oben genannten Formeln nun den Wert für die zugeführte Heizenergie $E_{Heiz}$ jeweils so ändert, dass die für den Siedevorgang zur Verfügung stehende Energie stets gleich bleibt, so dass also gilt,

$$E_{\text{siede Deckel zu}} = E_{\text{Siede Deckel auf}}$$

Dies ist möglich, da wie erläutert $E_{Heiz}$ in diesen Fällen erfindungsgemäß gezielt geändert wird und nicht gleich ist.

Das bedeutet, dass die Stärke des Siedevorgangs unabhängig ist von der Position des Deckels 30.

Infolgedessen hat der Deckel 30 nachwievor die Aufgabe, die Konvektion und den Strahlungsverlust aus der Speise 30 zu reduzieren, er hat aber nicht mehr den Nachteil, dass sein Zustand den Siedevorgang beeinträchtigt oder beeinflusst. Durch entsprechende Wahl der Parameter ist es auch nicht mehr wesentlich, ob der Deckel 30 nun bis auf die Druckausgleichsleitung komplett geschlossen ist, oder ob er noch zu einem gewissen Prozentsatz offensteht.

**Bezugszeichenliste**

|    |    |
|----|----|
| 10 | Gargerät |
| 11 | Tiegel |
| 12 | Boden |
| 13 | Seitenwände |
| 14 | Rand des Tiegels |
| 15 | Speise |
| 16 | Flüssigkeitsspiegel der Speise 15 |
| 20 | Heizelemente |
| 30 | Deckel |
| 31 | Scharnier des Deckels 30 |
| 40 | Gerätesteuerung |
| 41 | Deckelsensor |
| 51 | Energieverluste durch Leitung |
| 52 | Energieverluste durch Konvektion |
| 53 | Energieverluste durch Strahlung |

**Patentansprüche**

1. Gargerät (10) mit
   einem Tiegel (11),
   einem Deckel (30) für den Tiegel (11), welcher Deckel (30) in einer ersten Schließposition den Innenraum des Tiegels (11) nach oben abschließt und in einer zweiten Schließposition nach oben offen lässt,
   Heizelementen (20), die von einer Energieversorgung gespeist werden, einer Gargerätesteuerung (40) zum Garen einer Speise (15), und
   einem Sensor (41), welcher die aktuell eingenommene Schließposition des Deckels (30) auf dem Tiegel (11) erkennt und mit der Gerätesteuerung (40) in kabelgestützter oder kabelloser Informationsverbindung steht,
   wobei die Gerätesteuerung (40) so aufgebaut ist, dass sie die Energieversorgung für die Heizelemente (20) des Tiegels (11) regelt oder steuert, und die Steuerung oder Regelung der Heizelemente (20) abhängig von der Information des Sensors (41) erfolgt,

wobei in der Gerätesteuerung (40) Informationen über die Energieverluste beim Siedevorgang einer flüssigen oder hohe Flüssigkeitsanteile aufweisenden Speise (15) hinterlegt sind, welche Energieverluste einerseits für einen Schließzustand mit geöffnetem Deckel (30) und andererseits mit geschlossenem Deckel (30) vorgesehen sind, **dadurch gekennzeichnet,**

**dass** in Abhängigkeit der Energieverluste die Gerätesteuerung die Energieversorgung derart steuert, dass ein im Wesentlichen konstanter Siedevorgang beibehalten wird.

2. Gargerät nach Anspruch 1, **dadurch gekennzeichnet, dass** eine Eingabevorrichtung vorgesehen ist, die die Eingabe einer gewünschten Siedeintensität durch den Nutzer ermöglicht.

3. Gargerät nach Anspruch 1 oder 2, **dadurch gekennzeichnet, dass** im Tiegel (11) ein Sensor angeordnet ist, der die Siedeintensität detektiert, und der mit der Gerätesteuerung (40) in kabelgestützter oder kabelloser Informationsverbindung steht.

4. Gargerät nach Anspruch 3, **dadurch gekennzeichnet,**

**dass** der oder ein weiterer Sensor ein optisches Beobachtungselement insbesondere in Form einer Videokamera ist, und

**dass** ein oder mehrere Beleuchtungselement(e) innerhalb des Innenraums des Tiegels angeordnet sind.

5. Gargerät nach einem der Ansprüche 1 bis 4, **dadurch gekennzeichnet, dass** die Gerätesteuerung (40) so aufgebaut ist, dass sie aus der Information des Sensors (41) und den hinterlegten Informationen über die Energieverluste beim Siedevorgang eine Information betreffend den Unterschied des Energieverbrauchs bei geschlossenem und geöffnetem Deckel (30) ermittelt und auf einer Anzeigevorrichtung anzeigt.

6. Verfahren zur Steuerung eines Garvorganges einer flüssigen oder einer hohen Flüssigkeitsanteil besitzenden Speise in einem Tiegel (11) eines Gargerätes (10), der einen verschließbaren Deckel (30) aufweist, **dadurch gekennzeichnet,**

**dass** die Speise (15) bis zum Siedepunkt aufgeheizt wird, dass zumindest ab dem Erreichen des Siedepunktes der Schließzustand des Deckels (30) auf dem Tiegel (11) kontinuierlich oder in Abständen ermittelt wird, und

**dass** abhängig von dem ermittelten Schließzustand die Energiezufuhr zu der in dem Tiegel (11) befindlichen Speise (15) so gesteuert wird, dass die Siedestärke der Speise (15) unabhängig von der Schließposition des Deckels (30) auf dem Tiegel (11) ist.

7. Verfahren nach Anspruch 6, **dadurch gekennzeichnet, dass** vorab Daten über die Energieverluste beim Siedevorgang der Speise (15) in einer Gerätesteuerung (40) hinterlegt werden, und dass die die Schließposition betreffenden Daten die Auswahl oder Ermittlung der die Energiezufuhr steuernden Signale aus der Gerätesteuerung (40) beeinflussen.

8. Verfahren nach Anspruch 6 oder 7, **dadurch gekennzeichnet,**

**dass** in der Gerätsteuerung (40) Daten über eine Referenzsiedestärke hinterlegt werden,

**dass** die aktuellen Daten zum laufenden Siedevorgang mit den gespeicherten Daten dieser Referenzsiedestärke kontinuierlich verglichen werden, und dass die Gerätesteuerung (40) die Energiezufuhr zu der in dem Tiegel (11) befindlichen Speise (15) in Abhängigkeit von den Daten der gewünschten und der Referenzsiedestärke regelt.

9. Verfahren nach einem der Ansprüche 6 bis 8, **dadurch gekennzeichnet, dass** die Gerätesteuerung (40) nach dem Erreichen einer gewünschten Siedeintensität die weitere Energiezufuhr so regelt, dass die Siedeintensität für einen vorgegebenen oder aktuell einstellbaren Zeitraum beibehalten wird.

10. Verfahren nach einem der Ansprüche 6 bis 9, **dadurch gekennzeichnet, dass** die Gerätesteuerung (40) aus den hinterlegten Daten über die Energieverluste beim Siedevorgang der Speise (15) und der Information des Sensors (41) eine Information über den Unterschied des Energieverbrauchs bei geschlossenem und geöffnetem Deckel (30) ermittelt und anzeigt.

**Claims**

1. A cooking device (10) with
a pan (11),
a lid (30) for the pan (11), which lid (30), closes the interior chamber of the pan (11) at the top in a first closing position, and leaves it open at the top in a second closing position,
heating elements (20) which are supplied from an energy supply,
a cooking-device control (40) for cooking a meal (15), and a sensor (41), which detects the currently adopted closing position of the lid (30) on the pan (11) and participates in a wired or wireless information link with the device control (40),
wherein the device control (40) is constructed in such a manner that it regulates or controls the energy supply for the heating elements (20) of the pan (11), and the control or regulation of the heating elements (20) takes place dependent upon the information from the sensor (41), wherein, information on the energy losses in the boiling process of a liquid meal (15), or a meal providing a high liquid content, is stored in the device control (40), which energy losses, are provided, on the one hand, for a closing condition with open lid (30), and, on the other hand, with closed lid (30),
**characterised in that**
the device control controls the energy supply dependent upon the energy losses in such a manner that a substantially constant boiling process is maintained.

2. The cooking device according to claim 1,
**characterised in that**
an entry device is provided, which allows the entry by the user of a desired boiling intensity.

3. The cooking device according to claim 1 or 2,
**characterised in that**
a sensor is arranged in the pan (11) which detects the boiling intensity, and which participates in a wired or wireless information link with the device control (40).

4. The cooking device according to claim 3,
**characterised in that**
the sensor or a further sensor is an optical-observation element, especially in the form of a video camera, and that one or more lighting element(s) are arranged inside the interior chamber of the pan.

5. The cooking device according to any one of claims 1 to 4,
**characterised in that**
the device control (40) is constructed in such a manner that, from the information from the sensor (41) and the stored information on the energy losses in the boiling process, it determines and displays on a display device information relating to the difference in energy consumption with closed and open lid (30).

6. A method for controlling a cooking process of a liquid meal, or a meal providing a high liquid content, in a pan (11) of the cooking device (10), which provides a closable lid (30),
**characterised in that**
the meal (15) is heated up to boiling point, that, at least from the reaching of the boiling point, the closing condition of the lid (30) on the pan (11) is determined continuously or at intervals, and
that, dependent upon the determined closing condition, the energy supply to the meal (15) disposed in the pan (11) is controlled in such a manner that the boiling intensity of the meal (15) is independent of the closing position of the lid (30) on the pan (11).

7. The method according to claim 6,
**characterised in that**
data on the energy losses in the boiling process of the meal (15) are stored in advance in a device control (40), and that the data relating to the closing position influence the selection or determination of the signals from the device control (40) controlling the energy supply.

8. The method according to claim 6 or 7,
**characterised in that**
data on the reference boiling intensity are stored in the device control (40),
that the current data on the current boiling process are continuously compared with the stored data of this reference boiling intensity, and
that the device control (40) regulates the energy supply to the meal (15) disposed in the pan (11) dependent upon the data for the desired and the reference boiling intensity.

9. The method according to any one of claims 6 to 8,
**characterised in that**
after a desired boiling intensity has been reached, the device control (40), regulates the further energy supply in such a manner that the boiling intensity is maintained for a specified or currently adjustable period.

10. The method according to any one of claims 6 to 9,
**characterised in that**,
from the stored data on the energy losses in the boiling process of the meal (15) and the information from the sensor (41), the device control (40) determines and displays information on the difference in the energy consumption with closed and open lid (30).

**Revendications**

1. Appareil de cuisson (10), comprenant
un creuset (11),
un couvercle (30) pour le creuset (11), lequel couvercle (30) ferme vers le haut l'espace intérieur du creuset (11) dans une première position de fermeture et le laisse ouvert vers le haut dans une seconde position de fermeture, des éléments chauffants (20) alimentés par une alimentation en énergie,
une commande d'appareil de cuisson (40) pour la cuisson d'un aliment (15), et
un capteur (41) qui détecte la position de fermeture, occupée à un instant donné, du couvercle (30) sur le creuset (11), et est en liaison d'information, câblée ou sans fil, avec la commande d'appareil (40),
la commande d'appareil (40) étant conçue de sorte qu'elle règle ou contrôle l'alimentation en énergie pour les éléments chauffants (20) du creuset (11), et le contrôle ou le réglage des éléments chauffants (20) s'effectuant en fonction de l'information du capteur (41),
des informations sur les pertes d'énergie lors du processus d'ébullition d'un aliment (15) liquide ou qui renferme des parts élevées de liquide, étant consignées dans la commande d'appareil (40), lesquelles pertes d'énergie sont prévues d'un côté pour un état de fermeture en position d'ouverture du couvercle (30) et de l'autre côté en position de fermeture du couvercle (30),
**caractérisé en ce que**
la commande d'appareil contrôle l'alimentation en énergie en fonction des pertes d'énergie de telle sorte qu'un processus d'ébullition essentiellement constant est maintenu.

2. Appareil de cuisson selon la revendication 1, **caractérisé en ce qu'**il est prévu un dispositif d'introduction, qui permet à l'utilisateur d'introduire une intensité d'ébullition souhaitée.

3. Appareil de cuisson selon l'une des revendications 1 et 2, **caractérisé en ce qu'**un capteur est disposé dans le creuset (11), lequel capteur détecte l'intensité d'ébullition et est en liaison d'information, câblée ou sans fil, avec la commande d'appareil (40).

4. Appareil de cuisson selon la revendication 3, **caractérisé en ce que**
le ou un capteur supplémentaire est un élément d'observation optique, en particulier en forme d'une caméra vidéo, et un ou plusieurs éléments d'éclairage sont disposés à l'intérieur de l'espace intérieur du creuset.

5. Appareil de cuisson selon l'une des revendications 1 à 4, **caractérisé en ce que** la commande d'appareil (40) est conçue de sorte qu'elle détermine, à partir de l'information du capteur (41) et des informations consignées sur les pertes d'énergie lors du processus d'ébullition, une information afférente à la différence de consommation d'énergie en position de fermeture et d'ouverture du couvercle (30), et l'indique sur un dispositif d'affichage.

6. Procédé de commande d'un processus de cuisson d'un aliment liquide ou qui renferme une part élevée de liquide, dans un creuset (11) d'un appareil de cuisson (10), pourvu d'un couvercle (30) obturable,
**caractérisé en ce que**
l'aliment (15) est chauffé jusqu'au point d'ébullition, que l'état de fermeture du couvercle (30) sur le creuset (11) est déterminé en continu ou par intervalles au moins à partir du moment où le point d'ébullition est atteint, et que l'apport d'énergie à l'aliment (15), situé dans le creuset (11), est contrôlé en fonction de l'état de fermeture déterminé de sorte que l'intensité d'ébullition de l'aliment (15) est indépendante de la position de fermeture du couvercle (30) sur le creuset (11).

7. Procédé selon la revendication 6, **caractérisé en ce que** des données sur les pertes d'énergie lors du processus d'ébullition de l'aliment (15) sont préalablement consignées dans une commande d'appareil (40), et que les données afférentes à la position de fermeture influent sur la sélection ou la détermination des signaux de la commande d'appareil (40), qui contrôlent l'apport d'énergie.

8. Procédé selon l'une des revendications 6 et 7, **caractérisé en ce que**
des données sur une intensité d'ébullition de référence sont consignées dans la commande d'appareil (40),
les données à un instant donné, afférentes au processus d'ébullition en cours, sont comparées en continu aux données mémorisées de cette intensité d'ébullition de référence, et que la commande d'appareil (40) règle l'apport d'énergie à l'aliment (15), situé dans le creuset (11), en fonction des données de l'intensité d'ébullition souhaitée et de l'intensité d'ébullition de référence.

9. Procédé selon l'une des revendications 6 à 8, **caractérisé en ce que** la commande d'appareil (40) règle l'apport d'énergie supplémentaire, après qu'une intensité d'ébullition souhaitée ait été atteinte, de sorte que l'intensité d'ébullition est maintenue pour une période prédéfinie ou réglable à un instant donné.

10. Procédé selon l'une des revendications 6 à 9, **caractérisé en ce que** la commande d'appareil (40) détermine et affiche, à partir des données consignées sur les pertes d'énergie lors du processus d'ébullition de l'aliment (15) et de l'information du capteur (41), une information sur la différence de la consommation d'énergie en position de fermeture et d'ouverture du couvercle (30).

**Fig. 1.**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008051265 A1
- DE 9414011 U1
- DE 102005020744 B3
- CN 101623170 A
- JP 2005087275 A
- EP 2345350 A1